# DEMANDE DE BREVET EUROPEEN

(11) **EP 4 091 509 A1**
(43) Date de publication de la demande: **23.11.2022**
(21) Numéro de dépôt: 22174244.8
(22) Date de dépôt: 19.05.2022
(51) Int. Cl.: A47J 47/08, B65D 51/16, B65D 81/20, A47J 36/02

(54) **CONTENANT COMPORTANT UN RÉCIPIENT POUR DENRÉES ET UN DISPOSITIF DE FERMETURE RÉUTILISABLES**

(30) Priorité: 21.05.2021 FR 2105324
(71) Demandeur: Bourgeat, 38490 Les Abrets-en-Dauphiné (FR)
(72) Inventeur: PILLOIX, Fabrice, 38110 LA CHAPELLE DE LA TOUR (FR)
(74) Mandataire: Germain Maureau

(57) **Abrégé**

Le contenant (100) comporte : un récipient (101) pour denrées (1000), le récipient (101) comportant un rebord (106) ; un couvercle (102) comportant une soupape (107) ; un joint (103) agencé de sorte à autoriser une fermeture étanche du contenant (100) entre le rebord (106) et le couvercle (102). Le contenant (100) est configuré pour présenter une configuration de verrouillage dans laquelle :
• le couvercle (102) est maintenu par rapport au récipient (101) ;
• le joint (103) ferme de manière étanche le contenant (100) entre le rebord (106) et le couvercle (102) ;
• l'intérieur du contenant (100) présente une dépression prédéterminé.

Le joint (103) comporte une lèvre (104) configurée pour se déformer en vue d'obtenir, dans la configuration de verrouillage, l'étanchéité entre le rebord (106) et le couvercle (102).

## Description

### Domaine technique de l'invention

Le domaine technique de l'invention concerne la conservation de denrées dans un contenant. En particulier, l'invention concerne un contenant comportant un récipient pour denrées et un dispositif de fermeture pour fermer le récipient.

### Etat de la technique antérieure

La distribution de repas, par exemple dans les collectivités, peut être organisée en liaison froide. En liaison froide, les plats/repas sont préparés dans une cuisine centrale avant d'être acheminés dans des restaurants dits « satellites » qui forment les endroits où les repas sont consommés. Pour la liaison froide, un protocole appliqué peut être le suivant :
- après cuisson de denrées, les denrées étant des aliments pour former les repas, les denrées subissent une réfrigération rapide avant d'être stockées à basse température ;
- en vue d'être distribués, les plats formés à partir des denrées sont conditionnés en portions individuelles ou en plats collectifs dans des barquettes en plastique fermées chacune par un film en plastique transparent thermosoudé à ladite barquette, ce conditionnement peut se faire avec les denrées encore chaudes ou froides, la cuisson des denrées peut avoir été réalisée directement dans les barquettes ;
- il est réalisé un transport des plats conditionnés et réfrigérés à destination des restaurants satellites, ce transport s'effectue en véhicules réfrigérés, par exemple à 3°C, ou dans des caisses isothermes ;
- dans chaque restaurant satellite, les plats conditionnés reçus sont entreposés dans une ou plusieurs armoires réfrigérées, par exemple à 3°C ;
- avant consommation dans un restaurant satellite, les barquettes subissent un réchauffage rapide en four de remise en température, à au moins 63°C à cœur, en moins d'une heure ; ce réchauffage des barquettes peut être réalisé soit barquettes fermées par les films transparents correspondant soit barquettes ouvertes sans les films transparents en fonction des denrées contenues, par exemple pour de la purée les films sont conservés lors du réchauffage pour éviter de la dessécher alors que pour des friands les films seront retirés pour que ces friands restent croustillants suite au réchauffage.

Un inconvénient de ce protocole est que chacune des barquettes et son couvercle associé formé par un simple film ne sont pas réutilisables, ce qui génère des déchets de matières plastiques conséquents.

Un autre inconvénient de ce protocole est que les barquettes formées en plastique présentent un risque sanitaire ; en effet, lors de l'utilisation d'une barquette en plastique il y a un risque de migration de perturbateurs endocriniens, contenus dans la barquette, dans les aliments stockés dans la barquette notamment lors de la cuisson des aliments s'ils sont cuits dans la barquette et/ou juste après la cuisson des aliments lorsque ces aliments sont placés encore chaud dans la barquette et/ou lors de la réchauffe de la barquette contenant les aliments. En fait, les matières plastiques comportent des substances qui perturbent le système hormonal humain, ce qui a pour effet d'induire des effets néfastes dans l'organisme humain : ces substances sont des perturbateurs endocriniens. La migration des perturbateurs endocriniens de synthèse, c'est-à-dire ceux que l'on retrouve dans les matières en plastique, dans l'alimentation est favorisée par la chaleur, les aliments gras ou acides.

Il est connu de l'état de la technique la demande de brevet ITBS20110087A1 permettant le stockage de produits sous vide.

### Objet de l'invention

L'invention a pour objet de limiter les déchets liés au conditionnement de denrées dans un contenant, notamment tout en permettant une ouverture facile du contenant.

A cet effet, l'invention est relative à un contenant comportant un récipient pour denrées et un dispositif de fermeture pour fermer le récipient, ce contenant étant tel que :
- le récipient comporte un rebord ;
- le dispositif de fermeture comporte un couvercle et une soupape ;
- le contenant comporte un joint agencé de sorte à autoriser une fermeture étanche du contenant entre le rebord et le couvercle ;
- le contenant est configuré pour présenter une configuration de verrouillage dans laquelle : le couvercle est maintenu par rapport au récipient, le joint ferme de manière étanche le contenant entre le rebord et le couvercle, l'intérieur du contenant est en dépression ;
- le joint comporte une lèvre configurée pour se déformer en vue d'obtenir, dans la configuration de verrouillage, l'étanchéité entre le rebord et le couvercle.

Un tel contenant est avantageux dans le sens où l'utilisation d'une lèvre ainsi agencée permet d'une part d'assurer, grâce à la dépression, le maintien en configuration de verrouillage sans nécessiter que cette dépression soit trop importante dans le contenant en particulier au moment du verrouillage du contenant, et d'autre part, de rendre aisée l'ouverture du contenant puisqu'une fois que la dépression est annulée par manœuvre de la soupape, le dispositif de fermeture repose simplement au-dessus du récipient et son retrait peut être réalisé en le soulevant simplement par rapport au récipient. Ainsi, le contenant peut être fermé et ouvert de manière à permettre la réutilisation du contenant et en particulier du récipient et du dispositif de fermeture, notamment nonobstant un nettoyage approprié : ceci permet donc de limiter les déchets.

Le contenant peut comporter en outre une ou plusieurs des caractéristiques suivantes :
- la soupape est configurée pour être manœuvrée, de préférence manuellement, pour autoriser le passage d'air de l'extérieur du contenant vers l'intérieur du contenant en vue de faire varier le contenant de sa configuration de verrouillage à une configuration de déverrouillage permettant le retrait du dispositif de fermeture par rapport au récipient ;
- le joint comporte un talon agencé pour permettre un positionnement idoine du couvercle par rapport au récipient avant passage du contenant dans sa configuration de verrouillage ;
- le contenant est tel que : le dispositif de fermeture comporte le joint ; le joint est solidaire du couvercle ; la lèvre est agencée pour être, dans la configuration de verrouillage, en contact avec le rebord du récipient ;
- le couvercle comporte une partie annulaire en creux dans laquelle le joint est logé en tout ou partie ;
- le joint est surmoulé sur le couvercle ;
- le récipient comporte un bac en inox ;
- le bac est délimité par une paroi d'épaisseur comprise entre 0,6 mm et 0,8 mm ;
- le couvercle est en inox ou en plastique ;
- le couvercle est en inox et est délimité par une paroi d'épaisseur comprise entre 0,6 mm et 0,8 mm ;
- le contenant est tel que : le couvercle comporte une face inférieure et une face supérieure, la face inférieure étant, dans la configuration de verrouillage, orientée vers le récipient ; le dispositif de fermeture comporte un siège de soupape pour ladite soupape, le siège de soupape comportant une première ouverture débouchant du côté de la face supérieure et une deuxième ouverture débouchant du côté de la face inférieure, le siège de soupape étant configuré de sorte que les première et deuxième ouvertures sont en communication fluidique lorsque la soupape est dégagée au moins en partie du siège de soupape ; la face inférieure comporte une partie concave dans laquelle débouche la deuxième ouverture ;
- le contenant est configuré de sorte que, lors du passage à la configuration de verrouillage, la dépression à l'intérieur du contenant correspond à une pression relative dans le contenant supérieure ou égale à -300 mbar.

L'invention est aussi relative à un dispositif de fermeture pour fermer un récipient pour denrées, le dispositif de fermeture et le récipient étant destinés à former un contenant, le dispositif de fermeture comportant un couvercle, un joint solidaire du couvercle et une soupape. Le joint comporte une lèvre agencée pour coopérer avec un rebord du récipient afin de fermer, par déformation de ladite lèvre, de manière étanche le contenant entre le rebord et le couvercle.

Le dispositif de fermeture peut comporter en outre une ou plusieurs des caractéristiques suivantes :
- le joint est surmoulé sur le couvercle ;
- le couvercle comporte une partie annulaire en creux dans laquelle le joint est logé en tout ou partie ;
- le dispositif de fermeture comporte une face inférieure et une face supérieure, la face inférieure étant destinée à être orientée vers le récipient ; un siège de soupape pour ladite soupape, le siège de soupape comportant une première ouverture débouchant du côté de la face supérieure et une deuxième ouverture débouchant du côté de la face inférieure, le siège de soupape étant configuré de sorte que les première et deuxième ouvertures sont en communication fluidique lorsque la soupape est dégagée au moins en partie du siège de soupape ; la face inférieure comporte une partie concave dans laquelle débouche la deuxième ouverture.

Par ailleurs, le dispositif de fermeture peut être tel que la lèvre est configurée pour autoriser la mise en œuvre d'une configuration de verrouillage du contenant dans laquelle :
- le couvercle est maintenu par rapport au récipient ;
- le joint ferme de manière étanche le contenant entre le rebord et le couvercle ;
- l'intérieur du contenant est en dépression ;
la dépression à l'intérieur du contenant, lors du passage à la configuration de verrouillage, correspondant à une pression relative dans le contenant supérieure ou égale à -300 mbar. Ceci peut se traduire par le fait que le dispositif de fermeture peut être tel que la lèvre est configurée de sorte à assurer le maintien de la fermeture du contenant lorsque l'intérieur du contenant est en dépression et que la dépression à l'intérieur du contenant correspond à une pression relative dans le contenant supérieure ou égale à -300 mbar.

L'invention est aussi relative à un kit pour contenant, le kit comportant : un couvercle ; un joint solidaire du couvercle et agencé de sorte à autoriser une fermeture étanche du contenant entre le couvercle et un rebord d'un récipient que comporte le contenant, le joint comportant une lèvre configurée pour se déformer en vue d'obtenir l'étanchéité entre le rebord et le couvercle ; des soupapes différentes et configurées chacune pour être montée au couvercle.

Dans le cadre du kit, la lèvre peut être configurée pour autoriser la mise en œuvre d'une configuration de verrouillage du contenant dans laquelle :
- le couvercle est maintenu par rapport au récipient ;
- le joint ferme de manière étanche le contenant entre le rebord et le couvercle ;
la dépression à l'intérieur du contenant, lors du passage à la configuration de verrouillage, correspondant à une pression relative dans le contenant supérieure ou égale à -300 mbar. Ceci peut se traduire par le fait que la lèvre peut être configurée de sorte à assurer le maintien de la fermeture du contenant lorsque l'intérieur du contenant est en dépression et que la dépression à l'intérieur du contenant correspond à une pression relative dans le contenant supérieure ou égale à -300 mbar.

L'invention est aussi relative à un procédé de conditionnement de denrées dans un contenant, le procédé de conditionnement comportant les étapes suivantes :
- mettre les denrées dans le récipient ;
- positionner le dispositif de fermeture au-dessus du récipient de sorte que le joint est agencé entre le couvercle et le récipient ;
- aspirer partiellement un gaz contenu dans le contenant en vue d'obtenir la configuration de verrouillage du contenant.

Par exemple, au terme de l'étape d'aspiration partielle du gaz contenu dans le contenant, la dépression à l'intérieur du contenant correspond à une pression relative dans le contenant supérieure ou égale à -300 mbar, les denrées étant mises dans le récipient à une température comprise entre 70°C et 90°C.

D'autres avantages et caractéristiques pourront ressortir de la description détaillée qui suit.

### Description sommaire des dessins

L'invention sera mieux comprise à la lecture de la description détaillée qui suit, donnée uniquement à titre d'exemple non limitatif et faite en se référant aux dessins annexés et listés ci-dessous.
La figure 1 représente une vue en perspective d'un contenant comportant un récipient et un dispositif de fermeture selon un mode de réalisation de l'invention, ce contenant étant placé en configuration de verrouillage pour laquelle un couvercle appartenant au dispositif de fermeture participe à la fermeture du récipient.
La figure 2 représente une vue en coupe de la vue en perspective de la figure 1 selon un plan parallèle au plan défini par les axes Z et X de la figure 1.
La figure 3 représente schématiquement une vue partielle de la figure 2, la vue partielle étant délimitée par un trait en pointillé et étant centrée sur un joint permettant de fermer le contenant de manière étanche entre le couvercle et le récipient.
La figure 4 représente schématiquement une vue similaire à celle de la figure 3 avec comme différence notable vis-à-vis de la représentation en figure 3 le fait que le joint n'est pas comprimé.
La figure 5 représente une vue en perspective du couvercle duquel le joint est solidaire selon un mode de réalisation de l'invention.
La figure 6 représente une vue en perspective du joint seul selon un mode de réalisation particulier.
La figure 7 représente une vue en coupe partielle schématique du contenant de la figure 1 selon un plan parallèle au plan défini par les axes Z et X de la figure 1, cette vue en coupe partielle étant centrée sur une soupape que comporte le dispositif de fermeture, la soupape adoptant en figure 7 une configuration d'obturation dans laquelle elle obture un orifice.
La figure 8 représente une vue en coupe partielle schématique du contenant selon un plan parallèle au plan défini par les axes Z et X de la figure 1, cette vue en coupe étant centrée sur la soupape qui adopte une configuration d'ouverture de l'orifice.
La figure 9 représente une vue en perspective de la soupape selon une réalisation particulière de cette soupape.
La figure 10 représente une vue en perspective d'un exemple de kit permettant de fermer, selon un mode de réalisation particulier, le contenant de manière étanche.
La figure 11 représente une vue en perspective du contenant selon un mode de réalisation particulier de l'invention.
La figure 12 représente une vue en coupe du contenant de la figure 11.
La figure 13 illustre, selon une vue en perspective, le dispositif de fermeture du contenant de la figure 11.
La figure 14 illustre une vue partielle en coupe du dispositif de fermeture de la figure 13, cette coupe étant pratiquée au travers de la soupape.
La figure 15 illustre un empilement de dispositifs de fermeture chacun du type de celui illustré en figure 13.

Sur ces figures, les mêmes références sont utilisées pour désigner les mêmes éléments. Les éléments représentés sur les différentes figures ne sont pas nécessairement réalisés à l'échelle afin de faciliter la compréhension des figures.

### Description détaillée

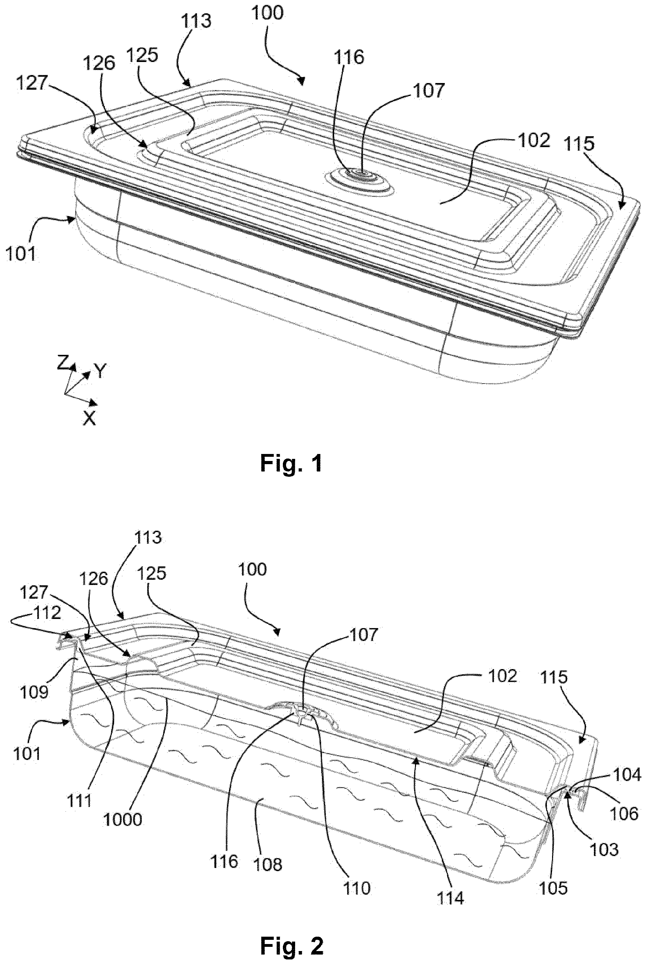

Un contenant 100 selon l'invention, dont une réalisation particulière est illustrée en figures 1 à 4, comporte un récipient 101 pour denrées 1000 (le récipient 101 est donc configuré pour contenir les denrées 1000) et un dispositif 113 de fermeture pour fermer le récipient 101 ; ainsi le récipient 101 et le dispositif 113 de fermeture peuvent coopérer pour obtenir le contenant 100 dans une configuration de fermeture, et en particulier, le cas échéant, dans une configuration de verrouillage comme décrite ci-après. Le contenant 100 permet alors notamment le conditionnement des denrées 1000. Le dispositif 113 de fermeture comporte un couvercle 102. En particulier, la fonction de ce couvercle 102 est de venir fermer/obturer le récipient 101, le couvercle 102 comporte en ce sens des dimensions adaptées au récipient 101. Le contenant 100 comporte un joint 103, la fonction de ce joint 103 est en particulier de permettre d'assurer l'étanchéité entre le couvercle 102 et le récipient 101. Le joint 103 comporte une lèvre 104, ce joint 103 muni de sa lèvre 104 étant tout particulièrement adapté pour assurer l'étanchéité du contenant 100 entre le couvercle 102, par exemple entre un bord 105 que comporte le couvercle 102, et un rebord 106 que comporte le récipient 101. Le couvercle 102 comporte en outre une soupape 107.

Il est défini un repère orthonormé XYZ, ce repère est représenté par les axes X, Y et Z à la figure 1 et donne le référentiel du contenant 100. Notamment, les notions de « supérieur », « inférieur », « au-dessus de » sont données selon l'axe Z qui définit en particulier la hauteur dans le référentiel du contenant 100.

Dans la présente description, le terme « environ » doit être interprété comme « à plus ou moins 10% près ». Il en va de même pour le terme « sensiblement ».

Par « compris entre deux valeurs », il est entendu dans la présente description que ces deux valeurs forment les bornes d'une plage correspondante pour laquelle les deux valeurs sont incluses.

Par « annulaire », il est entendu une forme générale en boucle fermée. Une boucle fermée au sens de la présente description peut indifféremment être conformée par des lignes droites et/ou une ou plusieurs lignes courbes.

Les denrées 1000 évoquées dans la présente description peuvent être tout type de marchandise destinée à la consommation, par exemple les denrées sont alimentaires ou médicinales. Par exemple, sur la figure 2, les denrées 1000 sont représentées schématiquement par un trait donnant un niveau de remplissage des denrées 1000 dans le récipient 101. Par exemple, les denrées 1000 consistent en une soupe.

Il est évoqué ci-après une dépression de l'intérieur du contenant 100, aussi formulée de la manière suivante «contenant 100 en dépression» ou «l'intérieur du contenant 100 est en dépression », qui correspond à un état tel que la pression d'un gaz à l'intérieur du contenant 100 est strictement inférieure à la pression à l'extérieur du contenant 100, cette pression à l'extérieur du contenant 100 correspondant par exemple à la pression d'un gaz, comme de l'air, d'un environnement dans lequel se trouve le contenant 100. Par exemple, la pression à l'extérieur du contenant est définie comme étant la pression atmosphérique. Notamment, les pressions évoquées dans la présente description sont celles d'un gaz correspondant.

Le gaz à l'intérieur du contenant 100 peut être de l'air ou peut être formé d'une composition permettant un conditionnement des denrées 1000 dans le contenant 100 sous atmosphère protectrice.

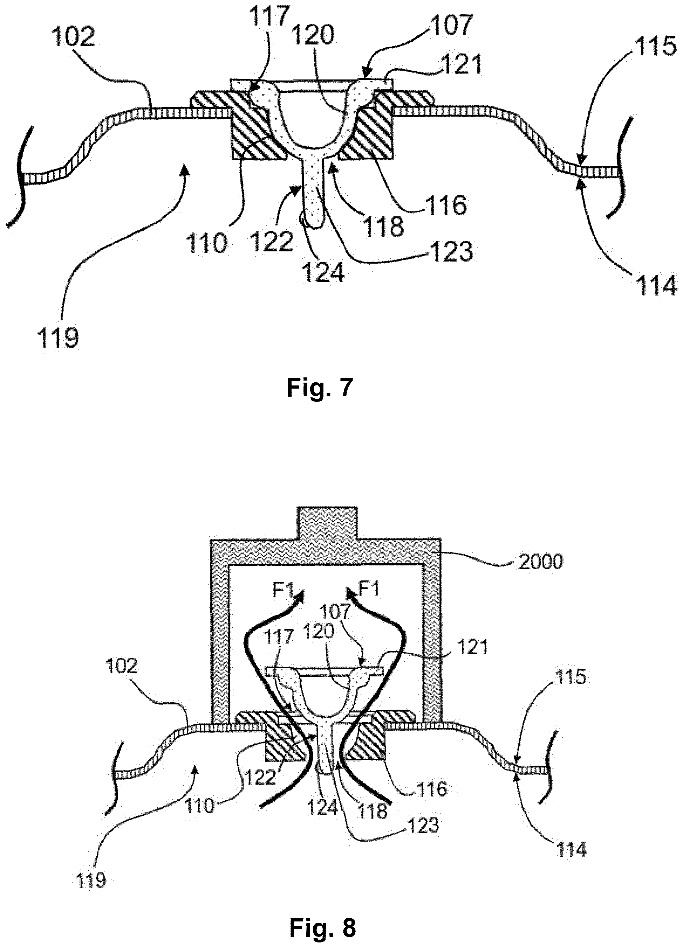

Selon un exemple, il est défini un état de vide « partiel » dans le contenant 100 lié à la dépression de l'intérieur du contenant 100. Notamment, cette dépression est dite faible dans le sens où elle correspond par exemple à une pression relative dans le contenant 100 dont la valeur minimale est d'environ -300 mbar à l'instant où le contenant 100 passe dans un état de fermeture étanche correspondant en particulier à la configuration de verrouillage décrite plus en détail ci-après. Cet état de vide partiel peut être obtenu par un tirage au vide partiel consistant notamment à aspirer l'intérieur du contenant 100, par exemple à l'aide d'un dispositif 2000 d'aspiration (figure 8), lorsque le couvercle 102 est positionné au-dessus du récipient 101 et que le joint 103 est positionné entre le couvercle 102 et le récipient 101 en vue d'assurer l'étanchéité entre le rebord 106 et le couvercle 102 dans la configuration de verrouillage.

L'étanchéité que permet le joint 103 est notamment une étanchéité à l'air et aux liquides.

Le récipient 101 peut comporter un, ou peut être constitué d'un, bac.

Ce bac est, de préférence, un bac gastronorme. Le bac gastronorme est normé en France selon la norme NF EN 631-1 qui est le résultat de la normalisation européenne EN 631. Ainsi, le bac gastronorme répond à certaines normalisations comme des mesures d'encastrement dans des supports appropriés, ainsi que des dimensions particulières : ceci permet une compatibilité du récipient 101 avec les besoins dans un processus de distribution de repas. Concernant les dimensions d'un tel bac gastronorme, elles se déclinent de sorte à proposer différents formats comme, par exemple, le format GN 1/1 qui peut présenter différentes profondeurs.

Par « rebord 106 du récipient 101 », il est entendu une surface, notamment dite « annulaire », bordant une ouverture du récipient 101 ; ladite ouverture permettant l'accès au contenu du récipient 101 et/ou de remplir au moins en partie le récipient 101. Ce rebord 106 forme en particulier une face supérieure du récipient 101. En particulier, le récipient 101 comporte un fond 108 et une paroi 109 latérale ; la paroi 109 latérale reliant le fond 108 au rebord 106 (voir notamment en ce sens la figure 2), notamment de sorte que la jonction de la paroi 109 latérale avec le rebord 106 délimite l'ouverture du récipient 101. Par exemple, le récipient 101 peut comporter une collerette délimitant le rebord 106, en particulier lorsque le récipient 101 est obtenu par emboutissage d'une tôle.

De préférence, le rebord 106 du récipient 101 est plan, voir plus ou moins plan dans le sens où il peut présenter localement des variations de niveau ayant pu être créées par des chocs subis par le rebord 106.

Le bord 105 du couvercle 102 correspond notamment à une partie périphérique du couvercle 102, et plus particulièrement à la périphérie d'une face inférieure 114 du couvercle 102 destinée à être orientée vers le récipient 101 en particulier lors de la fermeture étanche du contenant 100.

En fait, le joint 103 est agencé de sorte à autoriser une fermeture étanche du contenant 100 entre le rebord 106 et le couvercle 102. Plus particulièrement, le joint 103 peut être agencé de sorte à autoriser la fermeture étanche du contenant 100 entre le rebord 106 et le bord 105 ; en ce sens, lorsqu'il est fait référence à l'étanchéité entre le rebord 106 et le couvercle 102 dans la présente description ceci peut correspondre de manière plus limitative à l'étanchéité entre le rebord 106 et le bord 105.

Le contenant 100 est configuré pour présenter la configuration de verrouillage dans laquelle :
- le couvercle 102 est maintenu par rapport au récipient 101 ;
- le joint 103 ferme de manière étanche le contenant 100 entre le rebord 106 et le couvercle 102 ;
- l'intérieur du contenant 100 est en dépression, c'est-à-dire qu'il contient le gaz évoqué ci-avant dont la pression est strictement inférieure à la pression à l'extérieur du contenant 100.
Cette configuration est notamment celle visible en figures 2 à 3 où le joint 103, en particulier sa lèvre 104, est déformé pour permettre l'étanchéité recherchée. Autrement dit, le contenant 100 est configuré de sorte que la dépression de l'intérieur du contenant 100, dans la configuration de verrouillage, tend à solliciter le couvercle 102 en direction du récipient 101 et tend à comprimer le joint 103 d'où il résulte le maintien du couvercle 102 de manière étanche par rapport au récipient 101, notamment tant que la soupape 107 n'est pas manœuvrée pour supprimer ladite dépression. Dans la configuration de verrouillage, le contenant 100 est considéré comme fermé de manière étanche et le dispositif 113 de fermeture est maintenu par rapport au récipient 101. Ceci est avantageux dans le sens où, lorsque la dépression est supprimée, le dispositif 113 de fermeture peut être retiré par rapport au récipient 101 (le contenant 100 est alors ouvert) sans endommager le dispositif 113 de fermeture et sans effort autre que celui de soulever le dispositif 113 de fermeture au contraire d'un film en plastique qui va être arraché de la barquette en plastique à laquelle il est thermosoudé : le dispositif 113 de fermeture est alors réutilisable tout comme le récipient 101. On comprend donc que le récipient 101 et le dispositif 113 de fermeture peuvent être des éléments indépendants qui peuvent être séparés.

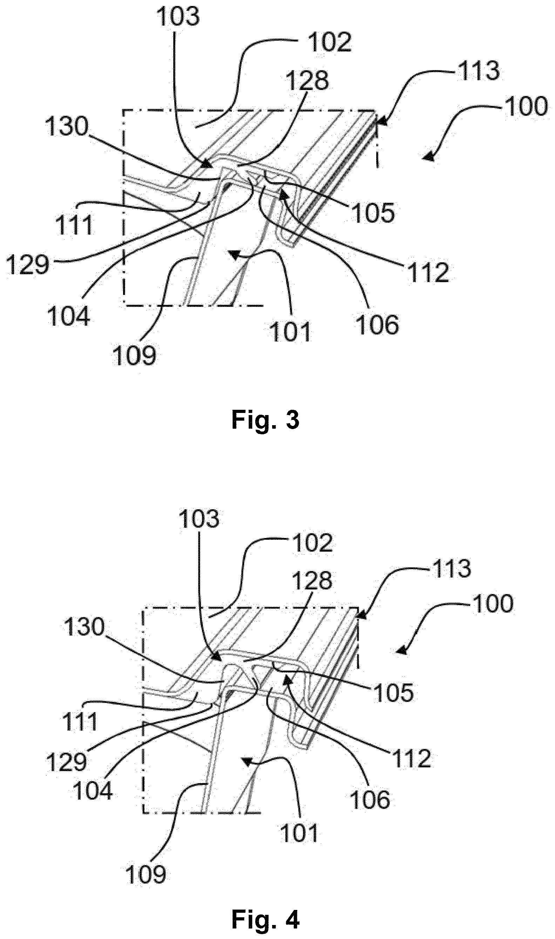

La lèvre 104 est configurée pour se déformer en vue d'obtenir, dans la configuration de verrouillage, l'étanchéité entre le rebord 106 et le couvercle 102. Par exemple, les figures 2 et 3 montrent la lèvre 104 déformée quand le contenant 100 est en configuration de verrouillage, tandis que la figure 4 montre une configuration de déverrouillage du contenant 100 dans laquelle la lèvre 104 repose simplement sur le rebord 106 du fait de la gravité mais n'est pas comprimée d'où il résulte qu'elle est moins fléchie/courbée qu'à la figure 3. Un tel contenant 100 dont le joint 103 comporte la lèvre 104 est avantageux dans le sens où la lèvre 104 ainsi agencée permet, d'une part, lorsque l'intérieur du contenant 101 est en dépression, d'assurer le maintien de la configuration de verrouillage par effet ventouse sans nécessiter que cette dépression ne soit trop importante dans le contenant 100, et, d'autre part, de faciliter l'ouverture du contenant 101 puisqu'une fois que la dépression de l'intérieur du contenant 101 est supprimée, notamment suite à la manœuvre de la soupape 107, le couvercle 102 repose simplement au-dessus du récipient 101.

De manière générale, le joint 103 comportant la lèvre 104 permet de limiter à une valeur adaptée la dépression nécessaire dans le contenant 100 pour obtenir la configuration de verrouillage et permet d'assurer ensuite le maintien de la configuration de verrouillage en fonction de l'évolution des conditions de température. Par exemple, en liaison froide, une fois les denrées 1000 mises dans le récipient 101 et le contenant 100 placé dans sa configuration de verrouillage grâce à la dépression adaptée de l'intérieur du contenant 100, cette dépression va pouvoir augmenter plus le contenant 100 refroidi, améliorant ainsi le maintien du dispositif 113 de fermeture, et donc du couvercle 102, par rapport au récipient 101.

Par ailleurs, le joint 103 dont la lèvre 104 est agencée pour participer à l'étanchéité entre le couvercle 102 et le rebord 106 est avantageux dans le sens où le passage à la configuration de verrouillage est aisé car c'est uniquement l'effort généré par la mise en dépression de l'intérieur du contenant 100 qui assure le verrouillage. Par exemple, si le joint fixé au couvercle venait plutôt assurer l'étanchéité entre le couvercle et la paroi latérale du récipient, ceci ne serait pas satisfaisant car cela rendrait plus difficile l'ouverture du contenant dans le sens où, une fois la dépression retirée, il faudrait encore vaincre les frottements du joint pour l'extraire du récipient et ainsi obtenir l'ouverture du contenant.

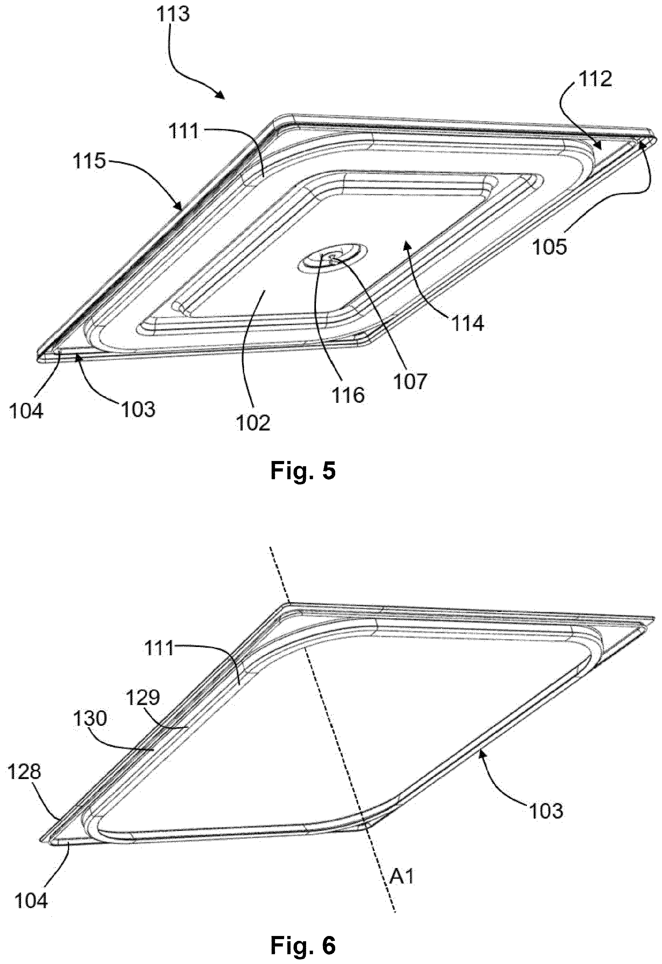

Selon un mode de réalisation préféré dont un exemple est illustré en figures 1 à 5, le dispositif 113 de fermeture comporte le joint 103 ; ce joint 103 étant par exemple représenté seul en figure 6. Dans ce cas, le joint 103 est solidaire du couvercle 102 et la lèvre 104 est agencée pour être, dans la configuration de verrouillage, en contact avec le rebord 106 du récipient 101. Par « joint 103 solidaire du couvercle 102 », il est notamment entendu que le joint 103 est fixé de manière définitive au couvercle 102 ou de manière amovible au couvercle 102. De préférence, le joint 103 et la lèvre 104 sont dits « périphériques » car ils s'étendent à la périphérie du couvercle 102 en particulier sur le bord 105. Le fait que le joint 103 soit solidaire du couvercle 102 permet de préserver son intégrité notamment dans le cas où des personnes viendront directement se servir dans le récipient. 101. En effet, il a été constaté que, lors d'un service directement à partir du récipient 101, son rebord 106 pouvait subir des chocs : ainsi bien qu'alternativement le joint 103 puisse être solidaire du rebord 106 cela aurait comme conséquence de positionner le joint 103 dans une situation où il serait susceptible de subir des chocs capables de le dégrader.

Le joint 103 peut être en silicone. Le silicone a l'avantage de présenter une bonne tenue en température et de présenter une conformité à entrer en contact avec des aliments.

Selon un mode de réalisation particulier, l'invention est aussi relative au dispositif 113 de fermeture pour fermer le récipient 101 comme le montre par exemple la figure 5, le dispositif 113 de fermeture et le récipient 101 étant destinés à former le contenant 100. Le dispositif 113 de fermeture comporte dans ce cas la soupape 107, le couvercle 102 et le joint 103 solidaire du couvercle 102. Dans le cadre de ce dispositif 113 de fermeture, la lèvre 104 du joint 103 est agencée pour coopérer avec le rebord 106 du récipient 101 afin de fermer, par déformation de ladite lèvre 104, de manière étanche le contenant 100 entre le rebord 106 et le couvercle 102. Il en résulte que ce dispositif 113 de fermeture permet de fermer le contenant 100 notamment apte à passer dans la configuration de verrouillage telle que décrite et notamment dans laquelle le joint 103 ferme, par déformation de la lèvre 104, de manière étanche le contenant 100 entre le rebord 106 et le couvercle 102. Ainsi, la lèvre 104 est configurée pour autoriser la mise en œuvre de la configuration de verrouillage. Les avantages conférés par un tel dispositif 113 de fermeture sont notamment ceux décrits précédemment en lien avec le couvercle 102 duquel le joint 103 est solidaire. Ainsi, ce qui s'applique au dispositif 113 de fermeture dans le cadre du contenant 100 peut aussi s'appliquer au dispositif 113 de fermeture seul dans le cas où ce dernier comporte le joint 103 solidaire du couvercle 102.

Le joint 103 peut être surmoulé sur le couvercle 102 et par exemple sur le bord 105, ceci rendant le joint 103 solidaire du couvercle 102. Le surmoulage du joint 103 sur le couvercle 102 permet de fixer le joint 103 au couvercle 102 et notamment au bord 105 en évitant d'avoir des interstices entre le joint 103 et le couvercle 102 dans lesquels des denrées 1000 (en particulier de la nourriture) pourraient s'introduire, ce qui serait problématique pour des raisons d'hygiène et compliquerait le nettoyage du dispositif 113 de fermeture.

Alternativement et non représenté aux figures, même si cela n'est pas préféré, le joint 103 peut être solidaire du récipient 101, le joint 103 est alors, de préférence, surmoulé sur le rebord 106 de sorte que la lèvre 104 puisse venir en contact avec couvercle 102 et plus particulièrement avec le bord 105 du couvercle 102 lors d'une fermeture du contenant 100/récipient 101 avant passage à la configuration de verrouillage.

Il a été décrit ci-avant que le joint 103 pouvait être surmoulé, dans ce cas il n'est pas amovible. Alternativement, le joint 103 peut être monté de manière amovible, le cas échéant sur le couvercle 102 (notamment sur le bord 105) ou sur le rebord 106 ; ceci permet d'éviter d'avoir à jeter le couvercle 102 ou le récipient 101 si le joint 103 est abimé puisqu'il suffit alors de le remplacer, mais se fait au détriment d'un nettoyage plus fastidieux du fait des denrées qui peuvent s'introduire entre le joint 103 et le couvercle 102 auquel ledit joint 103 est monté, ou entre le joint et le rebord auquel ledit joint est monté.

La lèvre 104 du joint 103 s'étend notamment de sorte à former une boucle fermée, par exemple à la manière visible en figures 5 et 6, pour assurer l'étanchéité souhaitée dans la configuration de verrouillage.

En particulier, la lèvre 104 peut s'étendre depuis une embase 128 du joint 103 de manière divergente par rapport à un axe A1 de référence entouré par le joint 103 (figures 2, 3 et 6), cet axe A1 de référence étant de préférence orthogonal à un plan dans lequel l'embase 128 du joint 103 est incluse. Ceci permet un effet « ventouse » tendant à orienter l'extrémité de la lèvre 104 vers l'extérieur du contenant 100 lorsque le contenant 100 est en configuration de verrouillage. En particulier, l'embase 128 est solidaire du couvercle 102 comme le montre par exemple les figures 3 et 4. Notamment, l'embase 128 et la lèvre 104 forment une seule pièce obtenue par moulage et en particulier par surmoulage sur le couvercle 102

Selon un mode de réalisation particulier, le dispositif 113 comporte un orifice 110 qui peut être obturé par la soupape 107 (figure 7) ou ouvert lorsque la soupape 107 autorise le passage de gaz au travers de l'orifice 110 (figure 8). Cet orifice 110 est notamment agencé au travers du couvercle 102. Notamment, la soupape 107 est configurée pour adopter une configuration d'obturation de l'orifice 110 et pour adopter une configuration d'ouverture de l'orifice 110, la configuration d'ouverture de l'orifice 110 permettant de laisser passer un gaz, comme par exemple le gaz contenu dans le contenant 100 ou de l'air provenant de l'extérieur au contenant 100, au travers du couvercle 102 par l'orifice 110.

Par exemple, la lèvre 104 est notamment conformée de sorte que, lors du tirage au vide partiel notamment réalisé par le dispositif 2000 d'aspiration au travers du couvercle 102 par l'orifice 110, d'éventuelles fuites entre le couvercle 102 et le récipient 101 soient suffisamment faibles pour que la quantité de gaz aspirée via l'orifice 110 soit supérieure à la quantité d'air apportée depuis l'extérieur du contenant 100 par les fuites et ainsi permettre un rapprochement du couvercle 102 vers le récipient 101. Si le joint 103 le permet, et notamment si le bord 105 et le rebord 106 sont parfaitement plans et lisses, alors la lèvre 104 peut permettre d'assurer un effet ventouse lorsque le couvercle 102 est rabattu sur le récipient 101 avec interposition du joint 103 : il n'y a alors plus de fuite entre le couvercle 102 et le récipient 101 lors du tirage au vide partiel. Il résulte du rapprochement du couvercle 102 vers le récipient 101 une compression du joint 103 permettant d'assurer, grâce à la dépression, le maintien du couvercle 102 (et donc du dispositif 113 de fermeture) par rapport au récipient 101 lorsque l'orifice 110 vient ensuite à être obturé par la soupape 107.

Le joint 103 est notamment aussi tel qu'il peut présenter une étanchéité suffisante pour conserver un niveau de vide acceptable sur la durée de conservation visée des denrées 1000 dans le contenant 100.

Par exemple, la lèvre 104 du joint 103 présente une souplesse apportée par sa forme et une dureté adaptées pour réaliser sa fonction et pour avantageusement compenser d'éventuelles déformations du récipient 101 et/ou du couvercle 102 notamment à l'endroit du contenant 100 où la lèvre 104 est en contact dans la configuration de verrouillage.

Par exemple, le joint 103 est réalisé en une matière présentant une dureté de 40 Shore A, ceci étant adapté pour la fonction recherchée de ce joint 103.

Selon une réalisation particulière, le contenant 100 peut être configuré de sorte que, lors du passage à la configuration de verrouillage, la dépression à l'intérieur du contenant 100 correspond à une pression relative dans le contenant 100 supérieure ou égale à -300 mbar. Autrement dit, le contenant 100 est configuré de sorte que sa dépression correspondant à une pression relative supérieure ou égale à -300 mbar permette, au moment/lors du passage à la configuration de verrouillage, d'obtenir une compression du joint 103 entre le couvercle 102 et le rebord 106 de sorte à assurer l'étanchéité entre le couvercle 102 et le rebord 106. Ceci permet de ne pas avoir à renforcer le récipient 101, ni le couvercle 102, pour résister mécaniquement à une mise sous vide importante du contenant 100 (par exemple cette mise sous vide importante correspond à une pression relative du gaz dans le contenant 100 strictement inférieure à - 950 mbar) d'où il résulterait un accroissement du poids du contenant 101 non souhaité dans la restauration. Encore un autre avantage d'une telle pression relative est que les denrées 1000 peuvent être conditionnées de manière rapide car le vide partiel peut être limité au strict nécessaire pour maintenir la configuration de verrouillage. La pression relative donnée dans le présent paragraphe pourra être adaptée par l'homme du métier en fonction de la taille du récipient 101, par exemple elle pourra être strictement supérieure à -300 mbar pour le récipient 101 dont le bac est de grande taille comme un bac gastronorme GN 1/1 ou strictement inférieure à -300 mbar pour le récipient 101 dont le bac est de petite taille comme un bac gastronorme GN 1/6. Selon un exemple particulier, pour des denrées 1000 mises dans le contenant 100 à une température d'environ 65°C au moment du passage à la configuration de verrouillage, la pression relative dans le contenant 100 choisie pour obtenir cette configuration de verrouillage est environ de -300 mbar pour un récipient 101 formé par un bac gastronorme GN 1/2 ; ensuite le refroidissement du contenant 100 et donc des denrées 1000 à une température d'environ 3°C induit que la dépression dans le contenant 100 se stabilise, pour cette température d'environ 3°C, à environ -550 mbar.

Ainsi, après passage à la configuration de verrouillage, la pression relative dans le contenant 100 peut évoluer, notamment en fonction de la température lorsque le contenant 100 est fermé de manière étanche alors qu'il contient des denrées 1000 chaudes qui sont ensuite refroidies comme évoqué ci-avant.

Selon une réalisation, le joint 103 peut comporter un talon 111, par exemple tel que visible en figures 2 à 6, agencé pour permettre un positionnement idoine du couvercle 102 par rapport au récipient 101 avant passage du contenant 100 dans sa configuration de verrouillage. Un tel positionnement permet d'assurer que la lèvre 104 présente un contact idoine avec une portion du contenant 100, formée par une portion du couvercle 102 telle que son bord 105 (cas non représenté où le joint 103 est solidaire du récipient 101) ou formée par le rebord 106 (cas représenté aux figures 2 à 4 pour lequel le joint 103 est solidaire du couvercle 102), avant de passer à la configuration de verrouillage grâce à la mise en dépression de l'intérieur du contenant 100. Plus particulièrement, le rôle du talon 111, lorsque le joint 103 est solidaire du couvercle 102, est de centrer convenablement le couvercle 102 lorsqu'il est rabattu sur le récipient 101 pour le fermer notamment dans un premier temps de manière non étanche avant de passer dans un second temps à la fermeture étanche du contenant 100 et donc du récipient 101 (configuration de verrouillage) ; le talon 111 va alors pénétrer dans le récipient 101 le long de la paroi 109 latérale du récipient 101. Ce centrage permet de faciliter la fermeture manuelle ou automatisée du récipient 101. Le talon 111 peut présenter une forme annulaire dont les dimensions externes sont strictement inférieures à celles de l'ouverture du récipient 101 de sorte que le talon 111 ne puisse pas venir s'emboîter en force dans le récipient 101 ce qui rendrait plus difficile ensuite l'ouverture du contenant 100. En particulier, le talon 111 est entouré par la lèvre 104.

Le talon 111 peut présenter, notamment à sa circonférence extérieure à l'opposé de l'embase 128 depuis laquelle le talon 111 s'étend, un arrondi 129 (par exemple visible en figures 3, 4 et 6) dont l'intérêt est de faciliter le centrage du couvercle 102 et la pénétration du talon 111 dans le récipient 101. Le talon 111 peut aussi comporter une face 130 reliant l'arrondi 129 à l'embase 128, cette face 130 du talon 111 est destinée à venir en regard partiellement avec la paroi latérale 109 et présente une inclinaison obtenue par la dépouille du moule utilisé pour former le joint 103, cette inclinaison facilitant aussi la pénétration du talon 111 dans le récipient 101. Ainsi, l'embase 128, la lèvre 104 et le talon 111 forment notamment une seule pièce obtenue par moulage et en particulier par surmoulage sur le couvercle 102.

Avantageusement, lorsque le joint 103 est solidaire du couvercle 102, le couvercle 102 peut comporter une partie 112 annulaire en creux, par exemple telle que visible en figures 2 à 5, dans laquelle le joint 103 est logé en tout ou partie. Une telle partie 112 annulaire en creux permet d'assurer une fonction de protection du joint 103, et en particulier de la lèvre 104 qui est alors, de préférence, logée en intégralité dans la partie 112 annulaire en creux. Moins le joint 103 dépasse du couvercle 102, moins il sera susceptible d'être abîmé ou accroché lors de la manipulation du couvercle 102 : cela tend à préserver son intégrité. La partie 112 annulaire en creux correspond notamment au bord 105.

Le bac que comporte, et le cas échéant qui constitue, le récipient 101 peut être en inox. Le bac en inox présente les avantages suivants : il est compatible avec le stockage de denrées 1000 notamment alimentaires ce qui permet de supprimer les risques liés aux perturbateur endocriniens lorsque les aliments sont seulement en contact avec de l'inox dont l'innocuité est reconnue ; il présente une résistance mécanique qui peut être adaptée à la configuration de verrouillage recherchée ; il permet d'avoir une bonne résistance mécanique tout en restant dans une gamme de poids adaptée notamment à la manipulation du contenant 100 en cuisine.

Le bac, lorsqu'il est en inox, peut être délimité par une paroi, par exemple formant le fond 108 et la paroi 109 latérale, d'épaisseur comprise entre 0,6 mm et 0,8 mm. Une telle épaisseur permet de conserver le récipient 101 dans une gamme de poids convenable, notamment lorsque le bac est un bac gastronorme.

Le bac peut être obtenu par emboutissage d'une tôle en inox.

Le couvercle 102 peut être en inox. Les avantages de l'inox sont ici les mêmes que ceux décrits en relation avec le bac.

Le couvercle 102, lorsqu'il est en inox, peut être délimité par une paroi d'épaisseur comprise entre 0,6 mm et 0,8 mm. Une telle épaisseur permet de conserver le couvercle 102 dans une gamme de poids convenable, notamment lorsqu'il est destiné à être utilisé avec le bac gastronorme.

Le couvercle 102 peut être obtenu par emboutissage d'une tôle en inox.

Combiner le récipient 101 en inox avec le couvercle 102 en inox permet notamment de minimiser le poids du contenant 100.

Alternativement, le couvercle 102 n'étant pas destiné à venir en contact direct avec les denrées 1000, il peut aussi être en plastique en particulier lorsque le contenant 100 est destiné au stockage de plat(s) froid ; ceci permettant de limiter la migration de perturbateurs endocriniens puisque les denrées 1000 ne seront pas chauffées. Un avantage du couvercle 102 en plastique est qu'il peut présenter une transparence permettant de visualiser et donc d'identifier le contenu du contenant 100 même dans sa configuration de verrouillage.

La soupape 107 a notamment pour fonction de boucher l'orifice 110 de sorte à participer, avec le joint 103, à la fermeture étanche du contenant 100 dans sa configuration de verrouillage comme le montre par exemple les figures 1, 2 et 7. Lorsque la soupape 107 autorise le passage d'un gaz cela permet soit de réaliser le tirage au vide partiel du contenant 100 soit de permettre l'ouverture du contenant 100 par apport d'air dans le contenant 100 pour supprimer sa dépression. Autrement dit, de manière générale, la soupape 107 peut être configurée pour :
- être manœuvrée, de préférence manuellement par exemple par déplacement ou déformation de la soupape 107, pour autoriser le passage d'air de l'extérieur du contenant 100 vers l'intérieur du contenant 100 en vue de faire varier le contenant 100 de sa configuration de verrouillage à la configuration de déverrouillage permettant le retrait du dispositif 113 de fermeture par rapport au récipient 101, ceci permettant aisément de passer de la configuration de verrouillage à la configuration de déverrouillage et en particulier de permettre le retrait du dispositif 113 de fermeture sans effort autre que celui de soulever le dispositif de fermeture ;
- et, le cas échéant, être actionnée (par exemple par déplacement ou déformation de la soupape 107) afin d'autoriser l'aspiration d'un gaz contenu dans le contenant 100, comme par exemple de l'air ou encore un gaz protecteur permettant un conditionnement sous une atmosphère protectrice des denrées 1000 contenues dans le contenant 100, pour mettre en dépression l'intérieur du contenant 100.
Le cas échéant, ceci permet d'avoir un unique organe (la soupape 107) dont l'actionnement peut, d'une part, permettre de faire le vide partiel dans le contenant 100 pour le verrouiller, notamment à l'aide d'un dispositif d'aspiration 2000 comme illustré en figure 8, et, d'autre part, peut permettre de casser le vide partiel (la dépression du contenant 100) afin de libérer le dispositif 113 de fermeture. En particulier, l'actionnement et la manœuvre de la soupape 107 permettent chacun la variation depuis la configuration d'obturation de l'orifice 110 vers la configuration d'ouverture de l'orifice 110.

En particulier, lorsque la soupape 107 est telle qu'elle est manœuvrable manuellement, c'est-à-dire sans outil, l'ouverture du contenant 100 dans sa configuration de verrouillage est facile, intuitive, sans effort important et sans risque pour les utilisateurs. La soupape 107 peut être conformée de sorte que sa manœuvre manuelle peut être réalisée avec des gants de protection anti brûlure qui équipent souvent le personnel de cuisine et/ou de service.

Selon un perfectionnement, le dispositif 113 de fermeture et donc le contenant 100 peuvent être tels que :
- le couvercle 102 comporte une face 114 inférieure et une face 115 supérieure, la face 114 inférieure étant destinée à être orientée vers le récipient 101 et plus particulièrement est orientée, dans la configuration de verrouillage, vers le récipient 101 ;
- le dispositif 113 de fermeture comporte un siège 116 de soupape pour ladite soupape 107, le siège 116 de soupape comportant une première ouverture 117 débouchant du côté de la face 115 supérieure et une deuxième ouverture 118 débouchant du côté de la face 114 inférieure, le siège 116 de soupape étant configuré de sorte que les première et deuxième ouvertures 117, 118 sont en communication fluidique lorsque la soupape 107 est dégagée au moins en partie du siège 116 de soupape (figure 8) et ainsi considérée comme étant dans sa configuration d'ouverture de l'orifice 110 ;
- la face 114 inférieure comporte une partie 119 concave dans laquelle débouche la deuxième ouverture 118.
En fait, le siège 116 de soupape délimite l'orifice 110 qui peut être obturé par la soupape 107 dans sa configuration d'obturation : dans ce cas la soupape 107 repose sur le siège 116 de soupape. Un exemple de ce perfectionnement est visible en figures 1, 2, 5, 7, 8. Le positionnement de la deuxième ouverture 118 dans la partie concave 119 a pour avantage de maintenir un éloignement de la deuxième ouverture 118 par rapport aux denrées 1000 stockées dans le récipient 101 lorsque le couvercle 102 repose sur le récipient 101 avec interposition du joint 103 avant le passage à la configuration de verrouillage. Ceci permet d'alors d'éviter d'aspirer une partie des denrées 1000 au travers de l'orifice 110 lorsque la soupape 107 est actionnée pour autoriser l'aspiration du gaz présent dans le contenant 100 en vue d'obtenir la dépression souhaitée (figure 8) à l'intérieur du contenant 100. Par « la soupape 107 est dégagée au moins en partie du siège 116 de soupape », il est entendu qu'elle est dans sa configuration d'ouverture c'est-à-dire déplacée ou déformée de sorte à ne plus obturer complètement l'orifice 110 ; plus la soupape 107 sera dégagée plus l'orifice 110 sera ouvert facilitant ainsi la circulation de gaz au travers de l'orifice 110.

La soupape 107 peut être en silicone et notamment être obtenue par moulage de silicone, ce matériau étant tout à fait adapté pour fermer l'orifice 110 de manière étanche (configuration d'obturation) ou l'ouvrir par déplacement de la soupape 107 ou par déformation de la soupape 107 (configuration d'ouverture). Le silicone a en outre l'avantage de présenter une bonne tenue en température et de présenter une conformité à entrer en contact avec des aliments.

La soupape 107, dont un exemple particulier est notamment visible en figures 7 à 9, peut comporter une partie 120 creuse ouverte sur une collerette 121. La partie 120 creuse est notamment conformée pour venir épouser une surface du siège 116 de soupape lorsque la soupape 107 est dans sa configuration d'obturation. La collerette 121 sert, d'une part, à retenir la soupape 107 lorsque le contenant 100 est en configuration de verrouillage afin d'éviter que la dépression dans le contenant 100 n'aspire la soupape 107 dans le contenant 100 d'où il résulterait que la configuration de verrouillage ne pourrait être maintenue, et, d'autre part, à faciliter la préhension de la soupape 107 pour la tirer ou la déformer afin de retirer/supprimer la dépression dans le contenant 100. La soupape 107 comporte en outre un organe 122 de retenu configuré pour coopérer avec le siège 116 afin de retenir la soupape 107 pour la conserver liée au siège 116 de soupape lorsqu'elle est dégagée du siège 116 de soupape (configuration d'ouverture). Sur l'exemple représenté en figures 7 à 9, l'organe 122 de retenu comporte un corps 123 et une barre 124 ; le corps 123 s'étend depuis la partie 120 creuse dans une direction opposée à la collerette 121 jusqu'à la barre 124, cette barre 124 étant sensiblement orthogonale à la direction d'allongement du corps 123. L'organe 122 de retenu peut donc présenter une forme en T dont la barre 124 coopère avec la collerette 121 pour limiter l'amplitude de déplacement de la soupape 107 par butée contre le siège 116 de soupape tout en conservant la soupape 107 en lien avec le siège 116 de soupape.

En particulier, le siège 116 de soupape peut être serti dans un trou traversant du couvercle 102 ou peut être formé directement par une portion emboutie du couvercle 102. En particulier, lorsque le couvercle 102 est en plastique, cela autorise l'obtention du siège 116 directement lors du moulage du couvercle 102 : le siège est alors intégré au couvercle 102.

De manière plus générale, le contenant 100 tel que décrit avec sa soupape 107 présente l'avantage de permettre d'apporter une preuve d'inviolabilité lors de l'ouverture du contenant 100. En effet, lorsque le contenant 100 comporte les denrées 1000 stockées dans le récipient 101 et est dans sa configuration de verrouillage, la manœuvre de la soupape 107 en vue d'ouvrir le contenant 100 va permettre de vérifier que le contenant 100 n'a pas été déjà ouvert suite à sa mise en dépression : dans ce cas un bruit spécifique du type « pchitt » va se produire lors de la manœuvre de la soupape 107 indiquant que le contenant 100 était bien en dépression et donc dans sa configuration de verrouillage. Ceci permet de vérifier que le contenant 100 n'a pas été ouvert puis simplement refermé par rabat du dispositif 113 de fermeture de manière accidentelle ou volontaire entre la phase de conditionnement et la phase de réchauffe du contenant 100 en vue de servir son contenu : en effet, le dispositif 2000 d'aspiration serait nécessaire pour remettre le contenant 100 dans sa configuration de verrouillage.

La face 115 supérieure du couvercle 102 peut être configurée, notamment du fait de sa forme, pour autoriser la formation d'un empilement de contenants 100. Pour cela, la face supérieure 115 peut comporter une portion 125 (par exemple visible en figures 1 et 2) destinée à former une portée d'appui pour un récipient d'un autre contenant. De préférence, la portion 125 de la face 115 supérieure est agencée de sorte que la soupape 107, dans sa configuration d'obturation, est en retrait de ladite portion 125 de la face supérieure ; ceci permettant d'éviter à un contenant posé sur le couvercle d'un autre contenant dans sa configuration de verrouillage de venir en contact avec la soupape de cet autre contenant afin d'éviter une entrée d'air non souhaitée dans ledit autre contenant. Autrement dit, selon l'axe Z de la figure 1, la soupape 107 est agencée à un niveau inférieur au niveau de la portion 125 de la face 115 supérieure. Sur les figures 1 et 2, la portion 125 destinée à former la portée d'appui est délimitée par une première élévation 126 locale, de préférence annulaire, de la face 115 supérieure, la première élévation 126 locale entourant le siège 116 de soupape et étant entourée par une deuxième élévation 127 locale formant la périphérie de la face 115 supérieure. La deuxième élévation 127 locale étant notamment complémentaire à la partie 112 annulaire en creux formée par une portion correspondante de la face 114 inférieure.

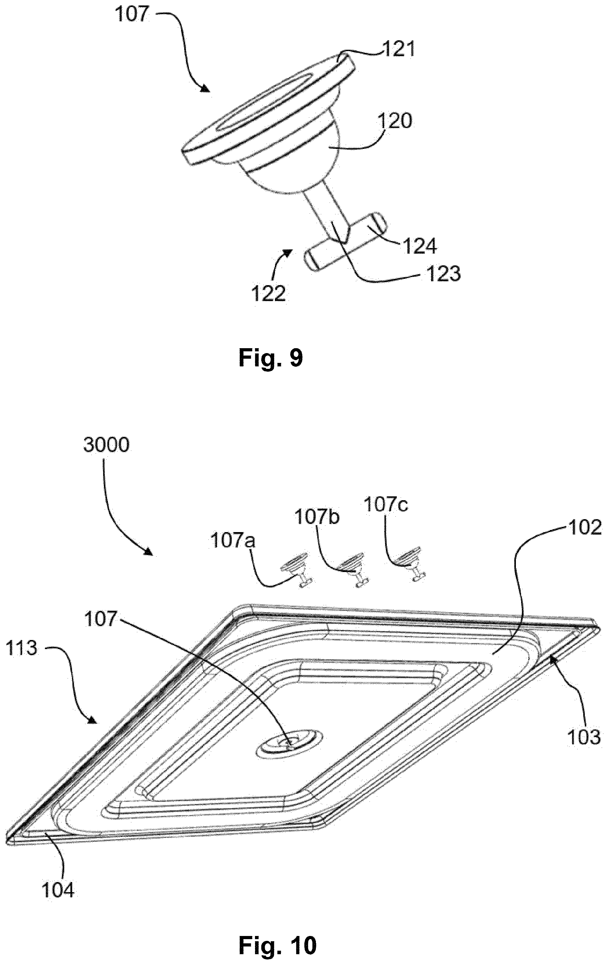

L'invention est aussi relative à un kit 3000 pour contenant 100 permettant notamment de réaliser la fermeture étanche du contenant 100, ce kit 3000 peut être tel que par exemple visible en figure 10, ce kit 3000 comporte :
- le couvercle 102 ;
- le joint 103 solidaire du couvercle 102 et agencé de sorte à autoriser la fermeture étanche du contenant 100 entre le rebord 106 et le couvercle 102, le joint 103 comportant la lèvre 104 configurée pour se déformer en vue d'obtenir l'étanchéité entre le rebord 106 et le couvercle 102 en particulier dans la configuration de verrouillage telle que décrite ;
- des soupapes 107, 107a, 107b, 107c différentes et configurées chacune pour être montée au couvercle 102, par exemple de manière directe lorsque le siège 116 de soupape appartient au couvercle 102 ou de manière indirecte lorsque le siège 116 de soupape de soupape est serti sur le couvercle 102.
Autrement dit, le kit 3000 peut comporter le dispositif 113 de fermeture tel que décrit muni ou dépourvu de sa soupape 107. Le dispositif 113 de fermeture est, dans le cas du kit 3000, configuré pour recevoir de manière interchangeable sa soupape 107. Les soupapes 107, 107a, 107b, 107c sont, par exemple, différentes en couleur mais adaptées chacune pour être intégrée au couvercle 103. Par exemple, en figure 10, le kit 3000 représenté comporte le dispositif 113 de fermeture muni de sa soupape 107 ainsi que d'autres soupapes 107a, 107b, 107c (par exemple au nombre de trois) dites « additionnelles » différentes entre elles et différentes de la soupape 107. Ceci permet de choisir la soupape 107, 107a, 107b, 107c à installer par exemple selon un code couleur dépendant des denrées 1000 à stocker dans le récipient 101 destiné à être fermé à l'aide du dispositif 113 de fermeture : il est alors possible de connaître le contenu du contenant 100 sans avoir besoin de l'ouvrir en particulier lorsque le couvercle 102 est opaque.

Les soupapes 107, 107a, 107b, 107c du kit 3000 peuvent se présenter sous la forme représentée en figure 9. La forme en T de l'organe 122 de retenue, notamment combinée au fait que le matériau de l'organe 122 de retenu soit du silicone permet avantageusement de déformer l'organe 122 de retenu pour faire passer la barre 124 au travers de l'orifice 110 soit pour enlever la soupape 107 du dispositif 113 de fermeture, soit pour insérer la soupape 107 dans l'orifice 110 afin qu'elle assure sa fonction.

Ainsi, de manière générale, le dispositif 113 de fermeture peut être configuré pour que sa soupape 107 puisse être changée ; la soupape 107 est donc dans ce cas amovible.

Il est à présent décrit un procédé de conditionnement de denrées 1000 dans le contenant 100 tel que décrit, ce procédé de conditionnement correspondant notamment à la phase de conditionnement évoquée ci-avant. En ce sens, le procédé de conditionnement peut comporter une étape consistant à prévoir le contenant 100. Le procédé de conditionnement de denrées 1000 peut comporter les étapes, notamment successives, suivantes :
- mettre les denrées 1000 dans le récipient 101 (figure 2) ;
- positionner le dispositif 113 de fermeture au-dessus du récipient 101, dans lequel les denrées 1000 ont été mises, de sorte que le joint 103 est agencé entre le couvercle 102 et le récipient 101 (figure 1 et 2) ;
- aspirer partiellement le gaz (par exemple selon les flèches F1 passant par l'orifice 110 en figure 8) contenu dans le contenant 100 en vue d'obtenir la configuration de verrouillage du contenant 100.
En fait, au terme de l'étape d'aspiration, c'est-à-dire après que l'aspiration ait été stoppée, le contenant 100 est dans sa configuration de verrouillage et les denrées 1000 sont conditionnées dans le contenant 100. Un tel procédé de conditionnement de denrées 1000 est avantageux dans le sens où il permet d'obtenir le contenant 100, dans sa configuration de verrouillage, et dans lequel des denrées 1000 sont stockées/conditionnées de manière rapide ; le contenant 100 restant facile à ouvrir du fait de la présence du joint 103 comportant la lèvre 104 qui autorise le maintien de la configuration de verrouillage dans l'état de vide partiel du contenant 100. L'aspiration peut être mise en œuvre par le dispositif 2000 d'aspiration qui peut être à effet venturi et couplé au couvercle 102 de sorte que l'aspiration engendre un déplacement de la soupape 107 puis permette de réaliser le vide partiel dans le contenant 100 ; lorsque l'aspiration est stoppée alors la soupape 107 est automatiquement placée par rappel, du fait de la dépression dans le contenant 100, dans sa configuration d'obturation (figure 7) d'où il résulte l'obtention de la configuration de verrouillage du contenant 100. Alternativement, l'aspiration peut être mise en œuvre dans une chambre à vide, aussi appelée cloche à vide, formant le dispositif 2000 d'aspiration ; dans ce cas, le gaz contenu dans le contenant 100 peut être aspiré au travers du couvercle 102 après que l'aspiration ait provoqué l'obtention de la configuration d'ouverture de la soupape 107 et/ou entre la lèvre 104 et une surface correspondante du contenant 100 (par exemple le rebord 106). Autrement dit, dans le cadre d'une aspiration sous vide, la soupape 107 n'est pas forcément placée dans sa configuration d'ouverture. Après retour de la chambre à vide à la pression atmosphérique, le couvercle 102 se retrouve sollicité vers le récipient 101 de sorte à comprimer le joint 103, et la soupape 107 est plaquée contre le siège 116 de soupape d'où il résulte que le contenant 100 est dans sa configuration de verrouillage.

Selon une réalisation particulière, le procédé de conditionnement, c'est-à-dire l'utilisation du contenant 100, peut être tel que décrit ci-après. Des aliments formant les denrées 1000 sont déposés à l'intérieur d'un bac en inox notamment dit « standard» (c'est-à-dire non renforcé volontairement pour résister à un tirage au vide qui tend vers le vide absolu, ce tirage au vide correspondant notamment à une pression relative strictement inférieure à -950 mbar dans le contenant) au format gastronorme, ce bac en inox forme le récipient 101 du contenant 100. Selon cette réalisation, le dispositif 113 de fermeture du contenant 100 comporte le joint 103 qui est en silicone surmoulé sur le couvercle 102. Après avoir déposé les aliments dans le bac, le dispositif 113 de fermeture est ensuite déposé/rabattu sur le bac de sorte que le centrage du couvercle 102 sur le bac est assuré par le talon 111 du joint 103, ce talon 111 venant se positionner en partie à l'intérieur du bac de sorte que cette partie du talon 111 est entourée par la paroi 109 latérale. La lèvre 104 du joint 103 silicone est alors positionnée sur la face supérieure du bac formée par le rebord 106. Le verrouillage du contenant 100 est ensuite obtenu en venant effectuer une dépression à l'intérieur du contenant 100. Cette dépression correspond à l'obtention d'une pression relative d'environ -300 mbar (mais peut varier suivant les dimensions des modèles de bac de la norme gastronorme par exemple de GN1/1 à GN 1/9) dans le contenant 100. Cette dépression est obtenue par l'intermédiaire de la soupape 107 en silicone qui vient se décoller du siège 116 de soupape grâce au dispositif 2000 d'aspiration de type pompe à vide, ou système de venturi et son adaptateur couplé au couvercle 102 notamment de manière périphérique à la première ouverture 117 du siège 116 de soupape (figure 8). Cet adaptateur peut être positionné manuellement ou automatiquement au-dessus de la soupape 107. Autrement dit, le tirage au vide partiel du contenant 100 permet à la soupape 107 de se soulever du siège 116 de soupape puis de mettre en dépression le contenant 100 jusqu'au niveau de dépression souhaité. Lorsque le niveau de dépression souhaité est atteint, dispositif 2000 d'aspiration s'arrête, le cas échéant l'adaptateur est relevé/retiré, ce qui provoque un déplacement de la soupape 107 qui vient se plaquer contre le siège 116 de soupape grâce à la différence de pression entre l'intérieur du contenant 100 et l'extérieur du contenant 100. Cet état de vide partiel à l'intérieur du bac est conservé grâce au placage de la soupape 107 sur le siège 116 de soupape et par le placage de la lèvre 104 du joint 103 sur la face plane supérieure, c'est-à-dire le rebord 106, du bac. Ultérieurement, lorsque le contenu du contenant 100 doit être servi, l'ouverture du couvercle 102 s'effectue en « cassant le vide ». Cette opération est réalisée en soulevant/déformant la soupape 107 pour faire rentrer de l'air à l'intérieur du contenant 100. Le bruit caractéristique de l'air entrant dans le contenant 100 « pchitt » ainsi que le verrouillage du couvercle 100 sur le bac avant de manœuvrer la soupape 107 permettent d'apporter la preuve que le contenant 100 n'a pas été ouvert depuis sa mise sous-vide partiel et qu'aucun élément extérieur n'est venu « contaminer » les aliments contenus dans le bac. En effet, lorsque la pression à l'intérieur du contenant 100 est revenue à la même valeur que la pression atmosphérique, le dispositif 113 de fermeture est « déverrouillé » et il se soulève aisément par rapport au bac.

Le tirage au vide partiel par le dispositif 2000 d'aspiration de type à effet venturi peut être réalisé lorsque les denrées 1000 sont chaudes ou froides. Le tirage au vide partiel par le dispositif 2000 d'aspiration de type à cloche à vide peut être réalisé lorsque les denrées 1000 sont froides mais est déconseillé lorsque les denrées sont chaudes à cause des vapeurs qui peuvent encrasser la cloche à vide.

Un avantage de limiter la pression relative dans le contenant 100, au moment de son passage à sa configuration de verrouillage, à une pression supérieure ou égale à - 300 mbar est que cela permet de limiter le phénomène d'ébullition d'eau contenue dans les denrées 1000 qui pourrait se produire si le vide était plus important lorsque les denrées 1000 sont chaudes.

En particulier, le siège 116 de soupape et la soupape 107 sont représentés en figure 1 comme agencés au centre du couvercle 102, ceci n'est pas limitatif dans le sens où le siège 116 de soupape et la soupape 107 peuvent être positionnés n'importe où sur la surface du couvercle 102/par rapport au couvercle 102 bien entendu du moment que cela permet à la soupape 107 d'assurer sa fonction.

C'est le choix du joint 103 de manière adaptée pour assurer que, lors du passage à la configuration de verrouillage, la dépression à l'intérieur du contenant 100 correspond à la pression relative dans le contenant 100 supérieure ou égale à -300 mbar qui permet de fermer et/ou d'ouvrir sans effort, comme évoqué précédemment, le contenant 100 tout en permettant, le cas échéant, de limiter le poids du contenant 100. Par exemple, cette limitation du poids du contenant 100 peut être assurée en limitant l'épaisseur du couvercle 102 en inox et/ou du récipient 101 en inox (i.e. notamment du bac en inox) à l'épaisseur de la paroi correspondante selon la plage correspondante donnée précédemment (épaisseur comprise entre 0,6 mm et 0,8 mm pour la paroi du couvercle 102 et/ou pour la paroi du bac) ce qui permet de conférer une résistance suffisante, pour la pression relative décrite, au couvercle 102 et/ou au récipient 101. Ainsi, le joint 103, et donc sa lèvre 104, est notamment configuré pour maintenir la configuration de verrouillage dans les conditions de dépression précitées (i.e. la pression relative dans le contenant 100 supérieure ou égale à -300 mbar).

Il résulte de ce qui a été décrit précédemment en relation avec le procédé de conditionnement qu'au terme de l'étape d'aspiration partielle du gaz contenu dans le contenant 100, la dépression à l'intérieur du contenant 100 peut correspondre à la pression relative dans le contenant 100 supérieure ou égale à -300 mbar, ce qui est suffisant pour assurer le maintien du contenant 100 dans sa configuration de verrouillage, notamment tant que la soupape 107 n'est pas ouverte/manipulée pour supprimer cette dépression.

Dans le cas du procédé de conditionnement, au cours de l'étape d'aspiration partielle du gaz contenu dans le contenant 100, les denrées 1000 peuvent être à une température inférieure ou égale à 90°C. Le contenant 100 permet, par exemple, de conditionner des denrées 1000 dont la température est à 90°C ou à -25°C (denrées surgelées) ; le contenant 100 est donc polyvalent. Par exemple, les denrées 1000 mises dans le récipient 101 (notamment juste avant l'étape de positionnement du dispositif 113 de fermeture et l'étape d'aspiration partielle du gaz) sont à une température comprise entre 70°C et 90°C, et au terme de l'étape d'aspiration partielle du gaz contenu dans le contenant 100 la dépression à l'intérieur du contenant 100 correspond à la pression relative dans le contenant 100 supérieure ou égale à -300 mbar ; ceci permet d'éviter, lors de l'étape d'aspiration partielle du gaz contenu dans le contenant 100 et au terme de cette étape d'aspiration partielle du gaz contenu dans le contenant 100, une ébullition de l'eau qui pourrait être incluse dans les denrées 1000. Une telle ébullition peut effectivement être pénalisante dans le sens où elle peut provoquer un déplacement non souhaité du couvercle 102 lors de l'étape d'aspiration partielle du gaz, ou conduire à l'aspiration de vapeurs issues de l'ébullition et pouvant provoquer un encrassement de la cloche à vide comme évoqué précédemment ; l'utilisation de la dépression décrite pouvant éviter cette ébullition est avantageuse puisqu'elle permet donc quand même d'utiliser une cloche à vide car les vapeurs seront limitées.

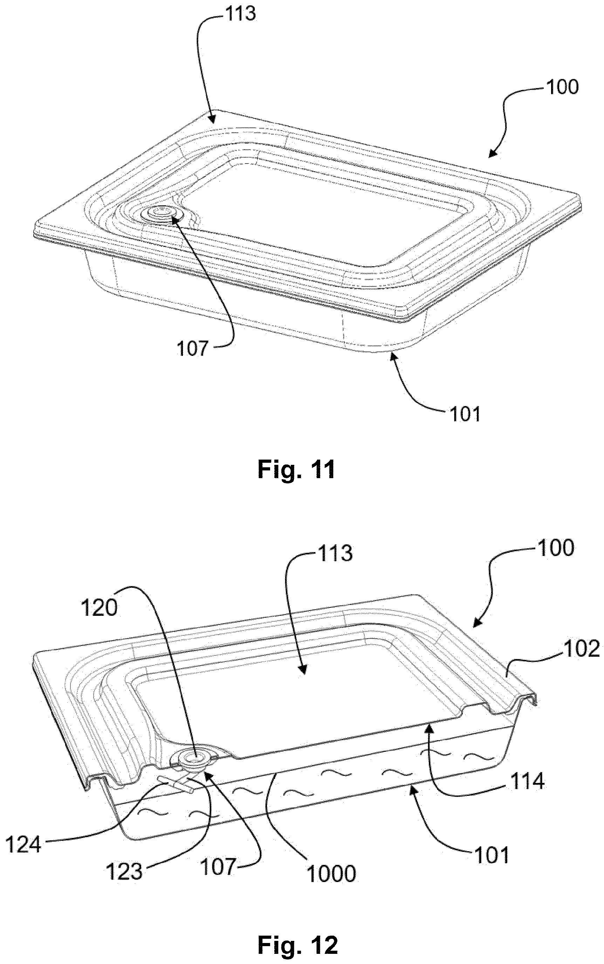

Selon un perfectionnement de la soupape 107 tel que par exemple illustré en figures 11 à 13, la soupape 107 peut être configurée pour tendre à éviter qu'elle ne vienne au contact de denrées 1000 contenues dans le récipient 101 en particulier lorsque le contenant 100 est dans sa configuration de verrouillage. A cet effet, la soupape 107 peut présenter une partie coudée qui permet à la soupape 107 de s'étendre, dans la configuration de verrouillage, du côté de, et le long de, la face du couvercle 102 orientée vers le récipient 101, cette face étant en particulier définie comme étant la face 114 inférieure dans ce qui a été décrit ci-avant. Cette partie coudée peut, dans l'exemple particulier décrit précédemment en relation avec la soupape 107, correspondre au corps 123 qui est alors coudé entre la partie creuse 120 et la barre 124.

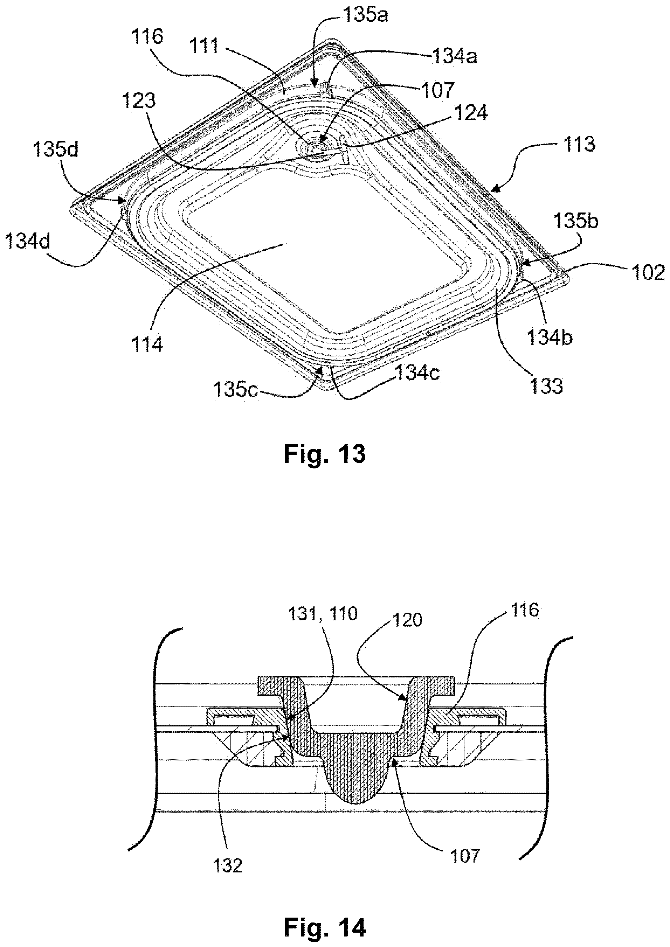

Il résulte de ce qui a été décrit précédemment que la soupape 107 participe, notamment avec sa coopération avec le siège 116 de soupape, à l'étanchéité à l'air du contenant 100 dans la configuration de verrouillage. La figure 7 en relation avec la figure 9 peuvent faire comprendre que le siège 116 de soupape, et notamment son orifice 110, peut comporter une zone sphérique. Une zone sphérique correspond à une portion de la surface d'une sphère comprise entre deux plans parallèles qui coupent cette sphère. Bien que l'obturation de l'orifice 110 délimité par une zone sphérique soit une solution fonctionnelle, cela requiert une précision importante dans la fabrication du siège 116 de soupape et de la soupape 107 afin de permettre une étanchéité satisfaisante, ceci étant d'autant plus vrai lorsque la dépression à l'intérieur du contenant 100 correspond à la pression relative dans le contenant 100 supérieure ou égale à -300 mbar. Ainsi, la soupape 107 devant épouser la zone sphérique du siège 116 de soupape dans la configuration d'obturation peut être un maillon faible dans les cas suivants :
- si le siège 116 de soupape et la soupape 107 ne sont pas bien adaptés ;
- si le siège 116 de soupape et/ou la soupape 107 sont endommagés localement.
Ainsi, selon un perfectionnement tel que par exemple illustré en figure 14, le siège 116 de soupape peut présenter une surface 131 tronconique et la soupape 107, notamment sa partie 120 creuse, peut présenter aussi une surface 132 tronconique destinée à coopérer avec la surface 131 tronconique du siège 116 de soupape en vue d'obturer ce dernier. Autrement dit, l'orifice 110 évoqué précédemment peut être délimité par la surface 131 tronconique du siège 116 de soupape. L'utilisation de telles surfaces tronconiques permet une meilleure tolérance à l'étanchéité puisque la soupape 107 peut se mettre en place plus facilement dans le siège 116 de soupape pour assurer une meilleure obturation de l'orifice 110 que dans le cas où cet orifice 110 est délimité par une zone sphérique. Dès lors, le passage à, et le cas échéant le maintien de, la configuration de verrouillage est facilité par les surfaces tronconiques lorsque la dépression permettant d'assurer cela est supérieure ou égale à -300 mbar comme évoqué précédemment. Notamment, la surface 131 tronconique du siège 116 de soupape est aussi appelée surface tronconique interne et la surface 132 tronconique de la soupape 107 est aussi appelée surface tronconique externe.

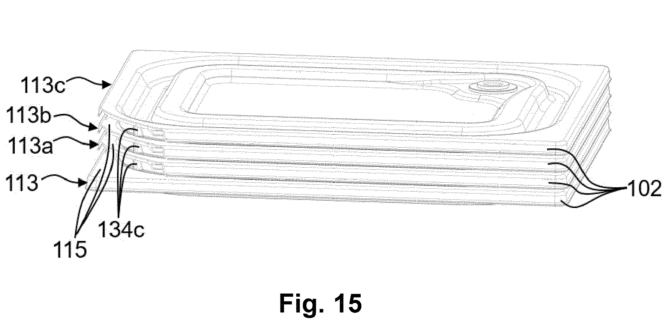

Selon une variante du couvercle 102, et donc du dispositif de fermeture 113 dont un exemple est illustré en figures 11 à 13, la face 114 inférieure du couvercle 102 peut présenter une élévation 133 locale annulaire (aussi appelée nervure annulaire), par exemple obtenue par emboutissage d'une tôle. Le rôle de cette élévation 133 locale annulaire est d'assurer un renforcement du couvercle 102 de sorte à s'opposer à sa déformation lors du passage à la configuration de verrouillage du contenant 100 et, lorsque le contenant 100 est dans sa configuration de verrouillage, ce renforcement permet de limiter au maximum l'épaisseur de la matière formant le couvercle 102 qui peut être de l'inox comme vu précédemment afin de l'alléger pour améliorer le confort de manipulation en cuisine par une personne. En outre cette élévation 133 locale annulaire peut servir de support pour former le talon 111, par exemple par surmoulage du talon 111 sur cette élévation 133 locale annulaire, dont une fonction est de permettre, via des excroissances 134a, 134b, 134c, 134d appartenant au talon 111, de faciliter l'empilement de dispositifs 113, 113a, 113b, 113c de fermeture comme le montre la figure 15. Ainsi, les excroissances 134a, 134b, 134c, 134d permettent de monter des piles de dispositifs 113 de fermeture (et donc de couvercles 102) bien droites sans inclinaison ; ceci permet de faciliter la prise des dispositifs 113 de fermeture par un robot pour robotiser la dépose des dispositifs 113 de fermeture sur des récipients 101. En fait, en figure 15 il est représenté un empilement de dispositifs 113, 113a, 113b, 113c de fermeture identiques dans lequel le dispositif 113 de fermeture du bas de l'empilement est surmonté de trois autres dispositifs 113a, 113b, 113c présentant une coupe partielle dans un angle/coin pour visualiser comment l'une des excroissances 134c correspondante vient au contact de la face 115 supérieure du couvercle 102 correspondant, le même principe s'appliquant pour les autres excroissances non visibles en figure 15. Pour faciliter l'empilement, les excroissances 134a, 134b, 134c, 134d peuvent être au nombre de quatre formées respectivement radialement au niveau de quatre coins 135a, 135b, 135c, 135d arrondis du talon 111 (figure 13) agencés chacun sur portion courbée d'une même face latérale annulaire externe de l'élévation 133 locale annulaire. Le renforcement du couvercle 102 permet de limiter sa déformation notamment lors du refroidissement de denrées 1000 chaudes, alors présentes dans le récipient 101 au moment du passage à la configuration de verrouillage, qui induiront une diminution de la pression relative (i.e. une augmentation de la dépression) par rapport au moment du passage à la configuration de verrouillage.

En particulier, l'élévation 133 locale annulaire peut être localement concentrique au siège 116 de soupape (figures 13) et plus particulièrement à son orifice 110. Ainsi, le siège 116 de soupape est alors agencé au niveau d'un des coins du couvercle 102 (i.e. dans un angle du couvercle 102) et notamment de sorte à être plus proche de ce coin par rapport aux autres coins du couvercle 102 comme cela est clairement visible en figure 13 ; ceci permettant de positionner le siège 116 de soupape au niveau du renforcement assuré par l'élévation 133 locale annulaire. En outre, ce positionnement du siège 116 de soupape dans un coin permet de tendre à limiter ou éviter le contact de la soupape 107 avec les denrées 1000 dans le cas où les denrées 1000 seraient de type pâteux et formeraient un monticule au centre du récipient 101 susceptible de venir au contact du dispositif 113 de fermeture.

La présente invention trouve une application industrielle notamment dans le domaine du conditionnement de denrées.

## Revendications

1. Contenant (100) comportant un récipient (101) pour denrées (1000) et un dispositif (113) de fermeture pour fermer le récipient (101), le contenant (100) étant tel que :
• le récipient (101) comporte un rebord (106) ;
• le dispositif (113) de fermeture comporte un couvercle (102) et une soupape (107) ;
• le contenant (100) comporte un joint (103) agencé de sorte à autoriser une fermeture étanche du contenant (100) entre le rebord (106) et le couvercle (102) ;
• le contenant (100) est configuré pour présenter une configuration de verrouillage dans laquelle : le couvercle (102) est maintenu par rapport au récipient (101), le joint (103) ferme de manière étanche le contenant (100) entre le rebord (106) et le couvercle (102), l'intérieur du contenant (100) est en dépression ;
• le joint (103) comporte une lèvre (104) configurée pour se déformer en vue d'obtenir, dans la configuration de verrouillage, l'étanchéité entre le rebord (106) et le couvercle (102) ;
**caractérisé en ce que** le contenant (100) est configuré de sorte que, lors du passage à la configuration de verrouillage, la dépression à l'intérieur du contenant (100) correspond à une pression relative dans le contenant (100) supérieure ou égale à -300 mbar.

2. Contenant (100) selon la revendication 1, **caractérisé en ce que** la soupape (107) est configurée pour être manœuvrée, de préférence manuellement, pour autoriser le passage d'air de l'extérieur du contenant (100) vers l'intérieur du contenant (100) en vue de faire varier le contenant (100) de sa configuration de verrouillage à une configuration de déverrouillage permettant le retrait du dispositif (113) de fermeture par rapport au récipient (101).

3. Contenant (100) selon l'une quelconque des revendications précédentes, **caractérisé en ce que** le joint (103) comporte un talon (111) agencé pour permettre un positionnement idoine du couvercle (102) par rapport au récipient (101) avant passage du contenant (100) dans sa configuration de verrouillage.

4. Contenant (100) selon l'une quelconque des revendications précédentes, **caractérisé en ce que** :
• le dispositif (113) de fermeture comporte le joint (103) ;
• le joint (103) est solidaire du couvercle (102) ;
• la lèvre (104) est agencée pour être, dans la configuration de verrouillage, en contact avec le rebord (106) du récipient (101).

5. Contenant (100) selon la revendication 4, **caractérisé en ce que** le couvercle (102) comporte une partie (112) annulaire en creux dans laquelle le joint (103) est logé en tout ou partie.

6. Contenant (100) selon l'une quelconque des revendications 4 à 5, **caractérisé en ce que** le joint (103) est surmoulé sur le couvercle (102).

7. Contenant (100) selon l'une quelconque des revendications précédentes, **caractérisé en ce que** le récipient (101) comporte un bac en inox.

8. Contenant (100) selon la revendication 7, **caractérisé en ce que** le bac est délimité par une paroi d'épaisseur comprise entre 0,6 mm et 0,8 mm.

9. Contenant (100) selon l'une quelconque des revendications précédentes, **caractérisé en ce que** le couvercle (102) est en inox ou en plastique.

10. Contenant (100) selon l'une quelconque des revendications 1 à 8, **caractérisé en ce que** le couvercle (102) est en inox et est délimité par une paroi d'épaisseur comprise entre 0,6 mm et 0,8 mm.

11. Contenant (100) selon l'une quelconque des revendications précédentes, **caractérisé en ce que** :
• le couvercle (102) comporte une face (114) inférieure et une face (115) supérieure, la face inférieure (114) étant, dans la configuration de verrouillage, orientée vers le récipient (101) ;
• le dispositif (113) de fermeture comporte un siège (116) de soupape pour ladite soupape (107), le siège (116) de soupape comportant une première ouverture (117) débouchant du côté de la face (115) supérieure et une deuxième ouverture (118) débouchant du côté de la face (114) inférieure, le siège (116) de soupape étant configuré de sorte que les première et deuxième ouvertures (117, 118) sont en communication fluidique lorsque la soupape (107) est dégagée au moins en partie du siège (116) de soupape ;
• la face (114) inférieure comporte une partie (119) concave dans laquelle débouche la deuxième ouverture (118).

12. Dispositif (113) de fermeture pour fermer un récipient (101) pour denrées (1000), le dispositif (113) de fermeture et le récipient (101) étant destinés à former un contenant (100), le dispositif (113) de fermeture comportant un couvercle (102), un joint (103) solidaire du couvercle (102) et une soupape (107), le joint (103) comportant une lèvre (104) agencée pour coopérer avec un rebord (106) du récipient (101) afin de fermer, par déformation de ladite lèvre (104), de manière étanche le contenant (100) entre le rebord (106) et le couvercle (102), la lèvre (104) étant configurée pour autoriser la mise en œuvre d'une configuration de verrouillage du contenant (100) dans laquelle : le couvercle (102) est maintenu par rapport au récipient (101), le joint (103) ferme de manière étanche le contenant (100) entre le rebord (106) et le couvercle (102), l'intérieur du contenant (100) est en dépression, **caractérisé en ce que** la dépression à l'intérieur du contenant (100), lors du passage à la configuration de verrouillage, correspond à une pression relative dans le contenant (100) supérieure ou égale à -300 mbar.

13. Dispositif (113) de fermeture selon la revendication 12, **caractérisé en ce que** le joint (103) est surmoulé sur le couvercle (102).

14. Dispositif (113) de fermeture selon l'une quelconque des revendications 12 à 13, **caractérisé en ce que** le couvercle (102) comporte une partie (112) annulaire en creux dans laquelle le joint (103) est logé en tout ou partie.

15. Dispositif (113) de fermeture selon l'une quelconque des revendications 12 à 14, **caractérisé en ce qu'**il comporte :
• une face (114) inférieure et une face (115) supérieure, la face (114) inférieure étant destinée à être orientée vers le récipient (101) ;
• un siège (116) de soupape pour ladite soupape (107), le siège (116) de soupape comportant une première ouverture (117) débouchant du côté de la face (115) supérieure et une deuxième ouverture (118) débouchant du côté de la face (114) inférieure, le siège (116) de soupape étant configuré de sorte que les première et deuxième ouvertures (117, 118) sont en communication fluidique lorsque la soupape (107) est dégagée au moins en partie du siège (116) de soupape ;
• la face (114) inférieure comporte une partie (119) concave dans laquelle débouche la deuxième ouverture (118).

16. Kit (3000) pour contenant (100), **caractérisé en ce que** le kit (3000) comporte :
• un couvercle (102) ;
• un joint (103) solidaire du couvercle (102) et agencé de sorte à autoriser une fermeture étanche du contenant (100) entre le couvercle (102) et un rebord (106) d'un récipient (101) que comporte le contenant (100), le joint (103) comportant une lèvre (104) configurée pour :
∘ se déformer en vue d'obtenir l'étanchéité entre le rebord (106) et le couvercle (102) ;
∘ autoriser la mise en œuvre d'une configuration de verrouillage du contenant (100) dans laquelle :
▪ le couvercle (102) est maintenu par rapport au récipient (101) ;
▪ le joint (103) ferme de manière étanche le contenant (100) entre le rebord (106) et le couvercle (102) ;
la dépression à l'intérieur du contenant (100), lors du passage à la configuration de verrouillage, correspondant à une pression relative dans le contenant (100) supérieure ou égale à -300 mbar ;
• des soupapes (107, 107a, 107b, 107c) différentes et configurées chacune pour être montée au couvercle (102).

17. Procédé de conditionnement de denrées (1000) dans un contenant (100) selon l'une quelconque des revendications 1 à 11, le procédé de conditionnement comportant les étapes suivantes :
• mettre les denrées (1000) dans le récipient (101) ;
• positionner le dispositif (113) de fermeture au-dessus du récipient (101) de sorte que le joint (103) est agencé entre le couvercle (102) et le récipient (101) ;
• aspirer partiellement un gaz contenu dans le contenant (101) en vue d'obtenir la configuration de verrouillage du contenant (100).
